# EUROPEAN PATENT SPECIFICATION

(11) **EP 1 222 085 B1**
(45) Date of publication and mention of the grant of the patent: **15.12.2004**
(21) Application number: 00969678.2
(22) Date of filing: 18.10.2000
(51) Int. Cl.: B60J 10/00

(54) **SEALING STRIPS**
DICHTUNGSSTREIFEN
LISIERES A CALFEUTRER

(30) Priority: 18.10.1999 GB 9924605
(43) Date of publication of application: 17.07.2002
(73) Proprietor: Laird Holdings Limited, Edinburgh EH2 3AP (GB)
(72) Inventor: DUMINY, Jacques, 73525 Schwabisch-Gmund (DE)
(74) Representative: Knott, Stephen Gilbert
(86) International application number: PCT/GB2000/004002
(87) International publication number: WO 2001/028793

(56) References cited:
- EP-A- 0 836 962
- DE-A- 1 504 883
- DE-A- 3 414 186
- GB-A- 2 070 675
- GB-A- 2 327 451
- US-A- 2 228 368
- US-A- 4 676 995
- US-A- 4 860 495

## Description

The invention relates to sealing strips. Sealing strips embodying the invention, and to be described in more detail below by way of example only, are for use in carrying out sealing functions in motor vehicle body construction.

It is known to provide sealing strips which are a composite of rubber or thermoplastic layers. EP-A-0 836 962 (Draftex Industries Limited) illustrates such a strip. However, such composite layer strips may be susceptible to wear and provide unacceptable performance in locations where there is surface slide, e.g. about door hinges. US-A-4676995 discloses a thermoplastic strip in which a low friction skin or coating is applied over a soft foam sealing element.

According to the invention, there is provided a strip of flexible thermoplastic elastomer material of open-cell foamed form having a first closed-cell covering thereover, the strip characterised by a second thin covering on the outside of the first covering, the second covering presenting an outwardly facing surface having a lower coefficient of friction than the first covering.

According to the invention, there is also provided a method of making a sealing strip, comprising the steps of extruding thermoplastic elastomer material in foamed open-cell form and extruding a first thin covering of closed-cell material onto at least part of the outer surface of the thermoplastic elastomer material, the method characterised by the step of extruding a second thin covering onto at least part of the outside of the first covering, the second covering presenting an outwardly facing surface having a lower coefficient of friction than the first covering.

Further embodiments of the strip according to the invention are referred to in the dependent claims 2 to 8.

Sealing strips embodying the invention, for use in carrying out sealing functions in motor vehicle bodies, will now be described, by way of example only, with reference to the accompanying diagrammatic drawings in which:
Figure 1 is a perspective view of a motor vehicle to which the sealing strips may be fitted; and
Figure 2 is a perspective view of one of the sealing strips in cross-section.

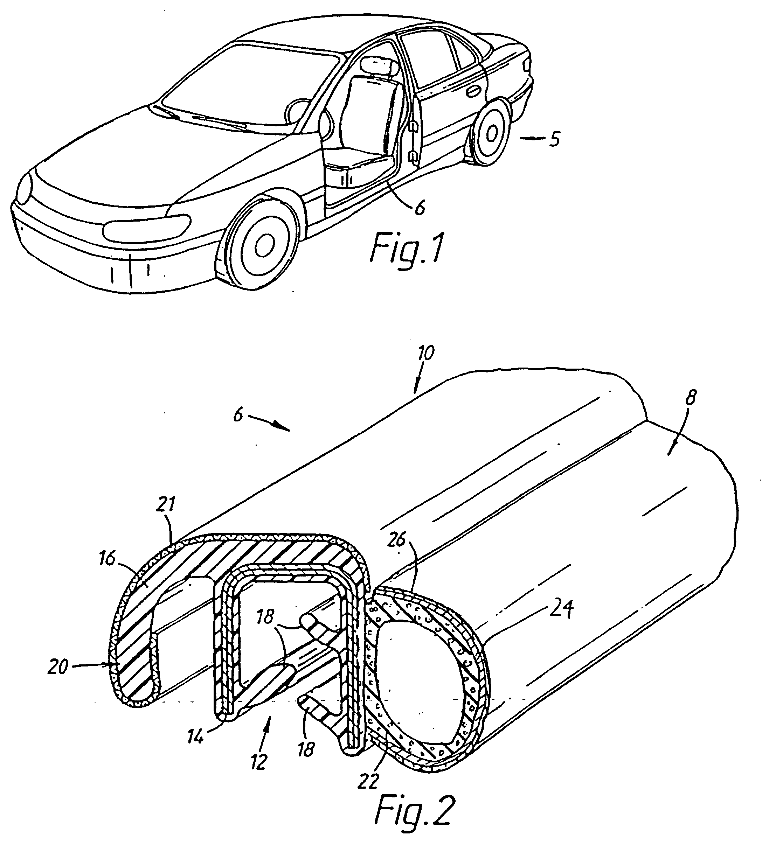

Figure 1 shows a motor vehicle body 5 with one of its doors removed to show a sealing strip 6 mounted around the periphery of the door opening. In use, the closing door closes onto the sealing strip 6 to provide a weather-tight seal.

One form of the sealing strip 6 is shown in Figure 2. It comprises a sealing portion 8 and a gripping or mounting portion 10. The gripping portion 10 is in the form of a longitudinal channel 12. In use, this is embracingly clamped to the surround of the door opening. More specifically, the surround of the door opening is normally defined by a flange where the inner and outer body panels are welded together.

As shown in Figure 2, the gripping portion 10 comprises a reinforcing core or carrier 14 such as made of resilient metal or other material, which is embedded in flexible material 16 such as rubber or plastics material. For example, the carrier 14 may be made of metal and in the form of (inverted) U-shaped elements arranged side-by-side to define the channel 12 and connected together by integral short connecting links or disconnected from each other. Other forms of carrier are, of course, possible. The carrier may be made of wire looped to and fro. The carrier 14 may be incorporated in the material 16 using a cross-head extruder. The carrier need not be made of metal. A flexible but substantially non-extensible tape may be incorporated into the material 16.

The material 16 is formed to define integral gripping lips 18 positioned on the opposite inside facing walls of the channel 12. These make contact with the opposite faces of the flange and increase the frictional gripping of the gripping portion 10. Advantageously, the material of the lips 18 is arranged to be softer than the remainder of the extruded material 16 to increase the frictional grip of the lips against the flange.

As shown in Figure 2, the material 16 is formed to define a so-called "cosmetic lip" 20. This is used to cover over, and to help to secure, the edge of a trim panel or the like inside the vehicle body.

The gripping portion 10 may be provided with a fabric covering 21.

The sealing portion 8 is of generally hollow tubular form. It comprises soft cellular material 22 forming a relatively thick tubular wall. Advantageously, the material 22 is extruded thermoplastic elastomer (TPE) material which is foamed by a suitable method such as with the use of water or by means of a chemical foaming agent. The wall made from material 22 is thus very soft and also very light in weight. In order to provide a protective covering over the hollow cells of the material 22 which may be of open-cellular form, it is covered by a thin extruded covering layer or skin 24 using a suitable known method to produce a thin covering of closed-cellular form.

The sealing portion 8 is attached to the gripping portion 10 by any suitable method.

However, instead, the extruded material 16 of the gripping portion 10 may also be made of soft cellular extruded TPE material similar to the material 22, foamed in the same way, and co-extruded with the material 22. In such a case, the thin skin 24 would extend over the outside surface of the material 16 of the gripping portion 10.

In use, the gripping portion 10 mounts the sealing strip on the door surround, so that the sealing portion 8 extends around the door opening, on the outside of the vehicle body. The closing door thus partially compresses the sealing portion 10 which thereby provides a weather-tight seal. When mounted in this way, the mouth of the channel 12 will of course face away from the centre of the door opening.

Although the use of TPE material for the sealing portion 8 (and possibly also for the gripping portion 10) is found to be very advantageous, being in particular very light in weight, the skin 24, which is required in order to cover the cells of the material 22, is found to present a relatively high friction surface. This may be disadvantageous in certain circumstances. For example, the closing vehicle door will partially slide across the surface of the sealing portion 8, particularly adjacent the "A" pillar of the vehicle where it is hinged. High friction contact at this position can cause problems.

In accordance with a feature of the embodiment being described. therefore, the sealing portion 8 is provided with an additional, external, skin 26 which is extruded over the outside of the skin 24 and is arranged to provide a low friction external surface. The skin 26 may be any suitable material, film or coating, such as plastics or rubber, extruded for example. Extruded hard rubber, or similar material may be used. Important requirements for the skin 26 are good adhesion to skin 24 and a low or lower coefficient of friction compared to that skin 24. Thus, a wide range of appropriately formulated and friction-tuned materials may be used.

In this way, the advantages of TPE material are preserved and the disadvantage of the relatively high friction surface of the skin 24 is overcome.

It will be appreciated that the sealing section 8, with the skins 24 and 26 thereon, can have any suitable shape. For example, it may be in the form of a lip instead of a tube. Instead of being used as a door seal, it may be used, for example, as a waist seal for the window opening of a vehicle door. In such a case, the low friction surface of the skin 26 is particularly advantageous.

The skin 26 can extend over the outside surface of the gripping section 10. However, the sealing section 8 need not be attached to a gripping section.

## Claims

1. A strip (6) of flexible thermoplastic elastomer material (22) of open-cell foamed form having a first, thin, closed-cell covering (24) thereover, **characterised by** a second thin covering (26) on the outside of the first covering (24), the second covering (26) presenting an outwardly facing surface having a lower coefficient of friction than the first covering (24).

2. A strip (6) according to claim 1, in which the second covering (26) is made of plastics or rubber material.

3. A strip (6) according to claim 1 or 2, of hollow tubular form.

4. A strip (6) according to any preceding claim, attached to a longitudinally extending mounting part (10) for mounting the strip (6) adjacent a movable member to be compressed thereby to provide a sealing function.

5. A strip (6) according to claim 4, in which the mounting part (10) is also made of thermoplastic elastomer material (16) and the first covering (24) extends thereover.

6. A strip (6) according to claim 5, in which the second covering (26) extends over the first covering (24) on the mounting part (10).

7. A strip (6) according to any preceding claim, in which the thermoplastic elastomer material (22) and the two coverings (24,26) are produced by extrusion.

8. A strip (6) according to claim 5 or 6, in which the thermoplastic elastomer material (22) of the strip (6) and of the mounting part (10) is co-extruded and in which at least the first covering (24) on the strip (6) and on the mounting part (10) is co-extruded.

9. A method of making a sealing strip (6), comprising the steps of extruding thermoplastic elastomer material (22) in foamed open-cell form, and extruding a first thin covering (24) of closed-cell material onto at least a part of the outer surface of the open-cell material (22), **characterised by** the step of extruding a second thin covering (26) onto at least part of the outside of the first covering (24), the second covering (26) presenting an outwardly facing surface having a lower coefficient of friction than the first covering (24).

## Patentansprüche

1. Streifen (6) aus weichem thermoplastischen Elastomermaterial (22) offenzellig geschäumter Form mit einer ersten dünnen geschlossenzelligen Ummantelung (24) darüber, **gekennzeichnet durch** eine zweite dünne Ummantelung (26) auf der Außenseite der ersten Ummantelung (24), wobei die zweite Ummantelung eine nach außen weisende Oberfläche mit einem geringeren Reibungskoeffizienten als die erste Ummantelung (24) bildet.

2. Streifen (6) nach Anspruch 1, wobei die zweite Ummantelung (26) aus Kunststoffoder Gummimaterial besteht.

3. Streifen (6) nach Anspruch 1 oder 2 hohler rohrförmiger Form.

4. Streifen (6) nach einem der vorhergehenden Ansprüche, befestigt an einem sich der Länge nach erstreckenden Befestigungsteil (10) zum Anbringen des Streifens (6), angrenzend an ein bewegliches Element, um dadurch zusammengepresst zu werden, um eine Dichtungsfunktion bereitzustellen.

5. Streifen (6) nach Anspruch 4, wobei das Befestigungsteil (10) ebenso aus thermoplastischem Elastomermaterial (16) besteht und sich die erste Ummantelung (24) darüber erstreckt.

6. Streifen (6) nach Anspruch 5, wobei sich die zweite Ummantelung (26) über die erste Ummantelung (24) auf dem Befestigungsteil (10) erstreckt.

7. Streifen (6) nach einem der vorhergehenden Ansprüche, wobei das thermoplastische Elastomermaterial (22) und die beiden Ummantelungen (24, 26) durch Extrudieren hergestellt werden.

8. Streifen (6) nach Anspruch 5 oder 6, wobei das thermoplastische Elastomermaterial (22) des Streifens (6) und des Befestigungsteils (10) coextrudiert ist und wobei wenigstens die erste Ummantelung (24) auf dem Streifen (6) und auf dem Befestigungsteil (10) coextrudiert ist.

9. Verfahren zum Herstellen eines Dichtungsstreifens (6), die folgenden Schritte umfassend: Extrudieren des thermoplastischen Elastomermaterials (22) in offenzellig geschäumter Form und Extrudieren einer ersten dünnen Ummantelung (24) aus geschlossenzelligem Material auf wenigstens einen Teil der Außenfläche des offenzelligen Materials (22), **gekennzeichnet durch** den Schritt des Extrudierens einer zweiten dünnen Ummantelung (26) auf wenigstens einen Teil der Außenseite der ersten Ummantelung (24), wobei die zweite Ummantelung (26) eine nach außen weisende Oberfläche mit einem geringeren Reibungskoeffizienten als die erste Ummantelung (24) bildet.

## Revendications

1. Ruban (6) en matériau élastomère thermoplastique flexible (22) sous forme de mousse à cellules ouvertes comportant un premier recouvrement (24) mince à cellules fermées sur lui-même, **caractérisé par** un second recouvrement (26) mince sur l'extérieur du premier recouvrement (24), le second recouvrement (26) présentant une surface tournée vers l'extérieur avec un coefficient de friction inférieur à celui du premier recouvrement (24).

2. Ruban (6) selon la revendication 1, dans lequel le second recouvrement (26) est réalisé en matière plastique ou en caoutchouc.

3. Ruban (6) selon l'une ou l'autre des revendications 1 et 2, sous forme tubulaire creuse.

4. Ruban (6) selon l'une quelconque des revendications précédentes, attaché sur une partie de montage (10) s'étendant longitudinalement et destinée au montage du ruban (6) en position adjacente à un élément mobile afin d'être comprimé par celui-ci pour assurer une fonction d'étanchéité.

5. Ruban (6) selon la revendication 4, dans lequel la partie de montage (10) est aussi réalisée en matériau élastomère thermoplastique (16) et le premier recouvrement (24) s'étend sur celui-ci.

6. Ruban (6) selon la revendication 5, dans lequel le second recouvrement (26) s'étend par-dessus le premier recouvrement (24) sur la partie de montage (10).

7. Ruban (6) selon l'une quelconque des revendications précédentes, dans lequel le matériau élastomère thermoplastique (22) et les deux recouvrements (24, 26) sont produits par extrusion.

8. Ruban (6) selon l'une ou l'autre des revendications 5 et 6, dans lequel le matériau élastomère thermoplastique (22) du ruban (6) et celui de la partie de montage (10) sont coextrudés, et dans lequel au moins le premier recouvrement (24) sur le ruban (6) et sur la partie de montage (10) sont coextrudés.

9. Procédé pour réaliser un ruban d'étanchéité (6), comprenant les étapes consistant à extruder un matériau élastomère thermoplastique (22) sous forme de mousse à cellules ouvertes, et à extruder un premier recouvrement (24) mince en matériau à cellules fermées sur une partie au moins de la surface extérieure du matériau à cellules ouvertes (22), **caractérisé par** l'étape consistant à extruder un second recouvrement (26) mince sur une partie au moins de l'extérieur du premier recouvrement (24), le second recouvrement présentant une surface tournée vers l'extérieur avec un coefficient de friction inférieur à celui du premier recouvrement (24).
